# EUROPEAN PATENT SPECIFICATION

(11) **EP 3 950 107 B1**
(45) Date of publication and mention of the grant of the patent: **31.07.2024**
(21) Application number: 19932461.7
(22) Date of filing: 24.12.2019
(51) Int. Cl.: F04B 13/02, F04B 1/22, F04B 9/109, F04B 9/111

(54) **LIQUID DISPENSING PUMP, AND LIQUID DISPENSING DEVICE**
FLÜSSIGKEITSABGABEPUMPE UND FLÜSSIGKEITSABGABEVORRICHTUNG
POMPE DE DISTRIBUTION DE LIQUIDE ET DISPOSITIF DE DISTRIBUTION DE LIQUIDE

(30) Priority: 12.06.2019 CN 201910505523
(43) Date of publication of application: 09.02.2022
(73) Proprietor: Shenzhen Yhlo Biotech Co., Ltd., 518116 Shenzhen (CN)
(72) Inventor: ZHANG, Fuxing, Shenzhen, Guangdong 518116 (CN); XIAO, Yujin, Shenzhen, Guangdong 518116 (CN); HU, Kunhui, Shenzhen, Guangdong 518116 (CN); QIU, Huanjie, Shenzhen, Guangdong 518116 (CN)
(74) Representative: Michalski Hüttermann & Partner Patentanwälte mbB
(86) International application number: PCT/CN2019/128051
(87) International publication number: WO 2020/248573

(56) References cited:
- EP-A1- 0 709 572
- EP-A2- 0 303 220
- CN-A- 102 297 108
- CN-A- 103 410 696
- CN-A- 103 994 044
- CN-A- 103 994 045
- CN-A- 110 090 570
- CN-U- 204 134 593
- CN-U- 204 233 988
- DE-A1- 19 511 758
- DE-A1- 19 711 292
- DE-A1- 3 624 976
- DE-U1- 20 216 295
- FR-A1- 2 536 471
- GB-A- 2 132 283
- US-A- 4 366 918
- US-A1- 2010 046 320

## Description

### TECHNICAL FIELD

The present disclosure relates to the field of medical inspection instruments, in particular to a liquid dispensing pump and a liquid dispensing device.

### BACKGROUND

In the field of medical inspection instruments such as chemiluminescence immunoassay analyzers, wash solutions are needed to provide better washing effects for washing needles and provide a more stable buffer system for immune responses. Generally, the wash solution is formulated with a concentrated solution and pure water in a certain ratio. At present, there are mainly two approaches. One is to formulate the wash solution by a manufacturer before leaving a factory, and directly delivering the formulated wash solution to hospitals. The drawback to it is a large volume and heavy mass of the formulated wash solution, which not only increases the transportation cost but also occupies the storage space of the hospital departments and is inconvenient to use. The other approach is to provide concentrated wash solutions to the hospital departments, and manually formulating the wash solution by instrument operators of the departments in accordance with the guidance scheme of the manufacturer. This approach has the disadvantages such as inaccurate formulation of the wash solution, proneness to errors in manual operation, and the possibility of causing damage to the skin by improper protection from a concentrated wash solution.

DE 202 16 295 U1 discloses a piston pump having a drive for the connecting rod formed by a shaft coupled to the rod. The shaft is connected with the connecting rod to a further piston pump, wherein the volumes of the two pumps can be different.

DE 195 11 758 A1 discloses a metering and injection pump arrangement for pumping at least two free-flowing media, with each medium being assigned a pump.

EP 0 709 572 A1 discloses a controlled-action pumping system delivering pressurized fluids with a substantially constant flow rate, which can be used in particular for injecting fluids into liquid phase chromatography installations.

DE 36 24 976 A1 discloses a device for metering and conveying liquid media, consisting of two squeezing units, each with a working cylinder, the pump cylinders being connected.

FR 2 536 471 A1 discloses a pump for dispensing several different products rents in well-defined proportions using a single cylinder.

EP 0 303 220 A2 discloses a low pulsation displacement pump having a discharge stabilizing function which is suitable for use in analyzing devices.

US 4 366 918 A discloses a variable ratio metering, mixing and dispensing apparatus by which the components of a composition can be withdrawn by plunger pumps in a specific ratio, then mixed together and finally dispensed.

US 2010/046320 A1 discloses a shot pump for transferring a paste-like adhesive agent or the like, and a variable-speed-type two-liquid metering and mixing apparatus using the shot pump.

### SUMMARY

Based on this, the present disclosure provides a liquid dispensing pump. A ratio of cross-sectional areas of a first plunger to a second plunger is set according to a preset mixing ratio. In each cycle of a reciprocating movement of the first plunger and the second plunger, a first liquid storage cylinder and a second liquid storage cylinder discharge corresponding raw materials according to the preset mixing ratio. The raw materials flow together and are mixed in a subsequent liquid path to obtain a mixed liquid in the preset mixing ratio, thereby realizing the precise mixing of different raw materials. Also, this liquid dispensing pump discharges the raw materials in the same ratio each time, so that uniform mixing can be achieved without using a specialized mixer.

A liquid dispensing pump includes:
a first liquid storage cylinder provided with a first liquid inlet/outlet port;
a second liquid storage cylinder provided with a second liquid inlet/outlet port;
a first plunger movably connected to the first liquid storage cylinder, one end of the first plunger being inserted into an inner cavity of the first liquid storage cylinder;
a second plunger movably connected to the second liquid storage cylinder, one end of the
second plunger being inserted into an inner cavity of the second liquid storage cylinder; and
a driving assembly connected to the first plunger and the second plunger.

In the above-mentioned liquid dispensing pump, the driving assembly is configured to drive the first plunger and the second plunger to realize linear reciprocating movement, so that the first plunger along with the first liquid storage cylinder and the second plunger along with the second liquid storage cylinder each constitute a pump body that can suck and discharge liquid. During operation, the driving assembly drives the first plunger and the second plunger to operate simultaneously, that is, the first plunger and the second plunger move the same stroke each time. The ratio of the cross-sectional area of the first plunger to the second plunger is set according to a preset mixing ratio. In each cycle of the linear reciprocating movement of the first plunger and the second plunger, the first liquid storage cylinder and the second liquid storage cylinder discharge the corresponding raw materials according to the preset mixing ratio. The raw materials flow together and are mixed in the subsequent liquid path to obtain a mixed liquid in the preset mixing ratio, thereby realizing the precise mixing of the different raw materials. Also, this liquid dispensing pump discharges the raw materials in the same ratio each time, so that uniform mixing can be achieved without using a specialized mixer.

In one of the embodiments, the first plunger has a cross-sectional area larger than that of the second plunger. Under the premise of the same stroke, the volume of the liquid pushed out by the first plunger is greater than that of the liquid pushed out by the second plunger.

In one of the embodiments, a first sealing ring is provided at a junction between the first liquid storage cylinder and the first plunger, and a second sealing ring is provided at a junction between the second liquid storage cylinder and the second plunger. The first sealing ring and the second sealing ring are configured to improve the sealing performance of the first liquid storage cylinder and the second liquid storage cylinder, respectively.

In one of the embodiments, the driving assembly includes a motor, a screw rod connected to the motor, a nut sleeved on the screw rod, and a connection block connected to the nut; and the connection block is connected to the first plunger and the second plunger, respectively. The linear reciprocating movement of the first plunger and the second plunger is realized by transmission of the screw rod.

In one of the embodiments, the driving assembly includes a motor, a first crank connected to the motor, and a second crank connected to the motor; the first crank is connected to the first plunger; and the second crank is connected to the second plunger. The linear reciprocating movement of the first plunger and the second plunger is realized by transmission of the cranks.

Also, the present disclosure further provides a liquid dispensing device.

The liquid dispensing device includes the liquid dispensing pump in any one of the above embodiments, and further includes,
a first raw material tank;
a second raw material tank;
a mixing tank;
a first liquid path switcher connected among the first raw material tank, the liquid dispensing pump, and the mixing tank; and
a second liquid path switcher connected among the second raw material tank, the liquid dispensing pump, and the mixing tank.

In the liquid dispensing device as described above, the first liquid path switcher selectively enables conduction of the liquid path between the first raw material tank and the liquid dispensing pump, and the second liquid path switcher selectively enables conduction of the liquid path between the second raw material tank and the liquid dispensing pump. The liquid dispensing pump sucks raw materials from the first raw material tank and the second raw material tank, respectively. Then, the first liquid path switcher selectively enables conduction of the liquid path between the mixing tank and the liquid dispensing pump, and the second liquid path switcher selectively enables conduction of the liquid path between the mixing tank and the liquid dispensing pump. The liquid dispensing pump discharges different raw materials into the mixing tank according to a preset mixing ratio. In one suction and discharge cycle of the liquid dispensing pump, the liquid dispensing device completes a period of liquid mixing in the mixing ratio that is accurate and uniform.

In one of the embodiments, the first raw material tank is provided with a first liquid level sensor; the second raw material tank is provided with a second liquid level sensor; the mixing tank is provided with a third liquid level sensor. The first liquid level sensor, the second liquid level sensor, and the third liquid level sensor are electrically connected to the driving assembly, respectively. The first liquid level sensor is configured to detect whether the liquid level of the first raw material tank reaches a preset material-taking liquid level, and the second liquid level sensor is configured to detect whether the liquid level of the second raw material tank reaches a preset material-taking liquid level. The third liquid level sensor is configured to detect the liquid level height of the existing mixed liquid in the mixing tank. According to the first liquid level sensor, the second liquid level sensor, and the third liquid level sensor, trigger signals for controlling the first liquid path switcher, the second liquid path switcher, and the liquid dispensing pump to operate can be generated, thereby achieving the automated operation of liquid dispensing.

In one of the embodiments, the first liquid path switcher and the second liquid path switcher are solenoid valves or plunger valves.

In one of the embodiments, a first water quality sensor is provided between the first raw material tank and the first liquid path switcher.

In one of the embodiments, the mixing tank is provided with a drain port, and the drain port is connected to a second water quality sensor.

### BRIEF DESCRIPTION OF THE DRAWINGS

FIG. 1 is a schematic diagram of a liquid dispensing pump according to an embodiment of the present disclosure;
FIG. 2 is a schematic diagram of a liquid dispensing pump according to another embodiment of the present disclosure;
FIG. 3 is a schematic diagram of a combination of the first crank, the first plunger, and the first liquid storage cylinder in the liquid dispensing pump as shown in FIG. 2; and
FIG. 4 is a schematic diagram of a liquid dispensing device according to an embodiment of the present disclosure.

The meanings of reference numerals in the drawings are:
100-liquid dispensing device;
10- liquid dispensing pump, 11-first liquid storage cylinder, 111-first liquid inlet/outlet port, 12-second liquid storage cylinder, 121-second liquid inlet/outlet port, 13-first plunger, 14-second plunger, 15-driving assembly, 151-motor, 152-screw rod, 153-nut, 154-connection block, 155-first crank, 156-second crank, 16-first sealing ring, 17-second sealing ring;
20-first raw material tank;
30-second raw material tank;
40-mixing tank;
50-first liquid path switcher;
60-second liquid path switcher;
70-first water quality sensor;
80-second water quality sensor;
90-liquid supplement component, 91-liquid pump, 92-control valve, 93-filter, 94-manual valve.

### DETAILED DESCRIPTION OF THE EMBODIMENTS

In order to facilitate the understanding of the present disclosure, the present disclosure will be described more fully below with reference to the relevant drawings. The preferred embodiments of the present disclosure are shown in the drawings. However, the present disclosure can be implemented in many different forms and is not limited to the embodiments described herein. On the contrary, the purpose of providing these embodiments is to make the understanding of the present disclosure more thorough and comprehensive.

It should be noted that when an element is referred to as being "fixed to" another element, the element can be directly on the another element or there may be a mediate element. When an element is referred to as being "connected to" another element, the element can be directly connected to the another element or there may be a mediate element.

All technical and scientific terms used herein have the same meaning as commonly understood by those skilled in the technical field of the present disclosure unless otherwise defined. The terms used in the specification of the present disclosure herein are only for the purpose of describing specific embodiments, and are not intended to limit the present disclosure.

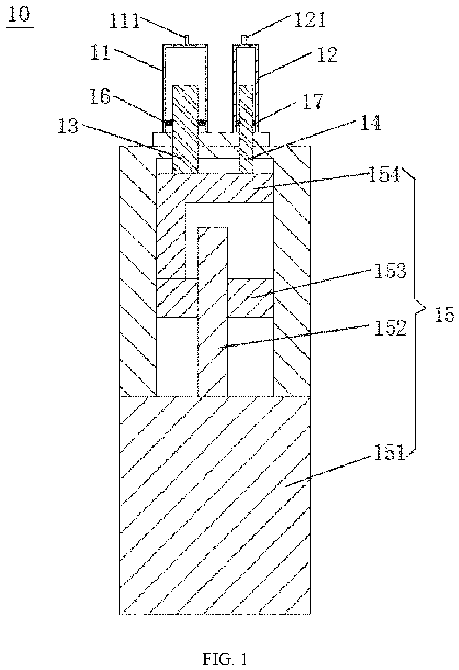

As shown in FIGS. 1 to 3, a liquid dispensing pump 10 according to an embodiment of the present disclosure is provided.

As shown in FIG. 1, the liquid dispensing pump 10 includes a first liquid storage cylinder 11, a second liquid storage cylinder 12, a first plunger 13 movably connected to the first liquid storage cylinder 11, a second plunger 14 movably connected to the second liquid storage cylinder 12, and a driving assembly 15 connected to the first plunger 13 and the second plunger 14. The first liquid storage cylinder 11 is provided with a first liquid inlet/outlet port 111. The second liquid storage cylinder 12 is provided with a second liquid inlet/outlet port 121. One end of the first plunger 13 is inserted into an inner cavity of the first liquid storage cylinder 11. One end of the second plunger 14 is inserted into an inner cavity of the second liquid storage cylinder 12. The driving assembly 15 is configured to drive the first plunger 13 and the second plunger 14 to reciprocate linearly.

In a case where the liquid dispensing pump 10 is applied to the above-mentioned mixing of pure water and concentrated solution, because a proportion of pure water is greater than that of concentrated solution during the mixing and dilution, the first liquid storage cylinder 11 may have a volume greater than that of the second liquid storage cylinder 12, as shown in FIG. 1. The first plunger 13 has a cross-sectional area larger than that of the second plunger 14. The first liquid storage cylinder 11 is configured to store raw materials with a relatively larger mixing proportion, and the second liquid storage cylinder 12 is configured to store raw materials with a relatively less mixing proportion. Accordingly, the cross-sectional area of the first plunger 13 is greater than that of the second plunger 14, and the volume of the liquid pushed out by the first plunger 13 is greater than that of the liquid pushed out by the second plunger 14 under the premise of the same stroke. In the same way, the liquid dispensing pump 10 can also be configured to mix other different liquid raw materials.

In addition, in consideration of the movable connection between the first plunger 13 and the first liquid storage cylinder 11 and between the second plunger 14 and the second liquid storage cylinder 12, in order to improve the sealing performance, in the present embodiment, a first sealing ring 16 is provided at the junction between the first liquid storage cylinder 11 and the first plunger 13, and a second sealing ring 17 is provided at the junction between the second liquid storage cylinder 12 and the second plunger 14. The first sealing ring 16 and the second sealing ring 17 are configured to improve the sealing performance of the first liquid storage cylinder 11 and the second liquid storage cylinder 12, respectively.

The driving assembly 15 can be implemented in various ways in order to achieve the linear reciprocating movement of the first plunger 13 and the second plunger 14.

For example, as shown in FIG. 1, in the present embodiment, the driving assembly 15 includes a motor 151, a screw rod 152 connected to the motor 151, a nut 153 sleeved on the screw rod 152, and a connection block 154 connected to the nut 153. The connection block 154 is connected to the first plunger 13 and the second plunger 14, respectively. The linear reciprocating movement of the first plunger 13 and the second plunger 14 is realized by transmission of the screw rod 152.

Taking the dilution of the concentrated solution as an example, as shown in FIG. 1, the first liquid storage cylinder 11 and the second liquid storage cylinder 12 are two mutually independent cavities with the volume of the first liquid storage cylinder 11 greater than that of the second liquid storage cylinder 12, and are configured to suck and discharge pure water and concentrated wash solution, respectively. Under the condition that the movement strokes of the first plunger 13 and the second plunger 14 are the same, the ratio of the cross-sectional areas of the first plunger 13 and the second plunger 14 is equivalent to the dilution ratio. The first plunger 13 and the second plunger 14 are mounted on the connection block 154, and the connection block 154 is fixedly connected to the nut 153. The nut 153 is engaged with the screw rod 152, and the screw rod 152 is fixedly connected to a rotating shaft of the motor 151. When the motor 151 rotates, the nut 153 rotates along with the screw rod 152 and drives the movement of the connection block 154, so that the first plunger 13 and the second plunger 14 move up and down in a piston manner. When the motor 151 rotates to drive the first plunger 13 and the second plunger 14 to move downward, pure water enters the first liquid storage cylinder 11 from the first liquid inlet/outlet port 111, and the concentrated wash solution enters the second liquid storage cylinder 12 from the second liquid inlet/outlet port 121. when the motor 151 rotates to drive the first plunger 13 and the second plunger 14 to move upward, the pure water in the first liquid storage cylinder 11 is discharged through the first liquid inlet/outlet port 111, and the concentrated wash solution in the second liquid storage cylinder 12 is discharged through the second liquid inlet/outlet port 121.

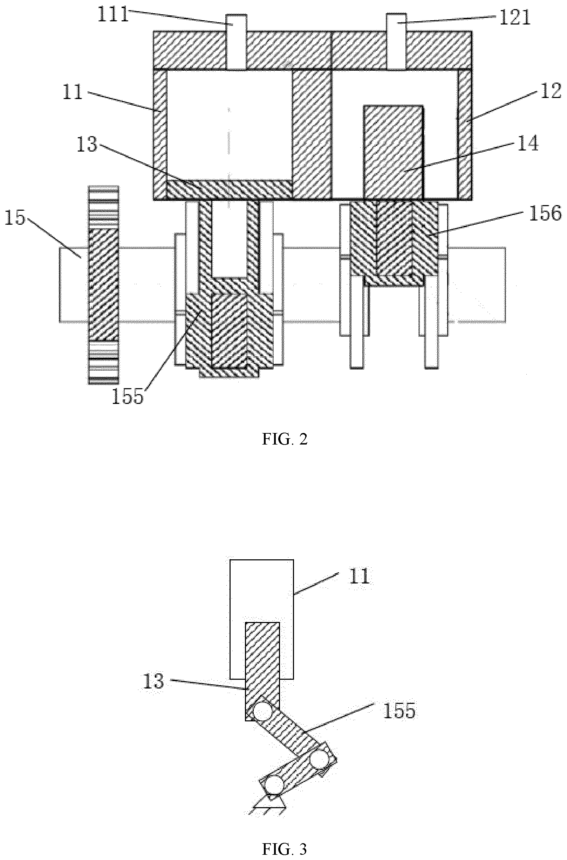

For another example, as shown in FIGS. 2 and 3, in other embodiments, the driving assembly 15 includes a motor 151, a first crank 155 connected to the motor 151, and a second crank 156 connected to the motor 151. The first crank 155 is connected to the first plunger 13. The second crank 156 is connected to the second plunger 14. The linear reciprocating movement of the first plunger 13 and the second plunger 14 is realized by transmission of the cranks.

Further, the operating strokes of the first plunger 13 and the second plunger 14 can be adjusted by adjusting the lengths of the first crank 155 and the second crank 156, so that the mixing ratio of the raw materials can be adjusted. In addition, they may also be in different phases, so that when one plunger moves downward, the other plunger moves upward, that is to say, when one plunger sucks liquid, the other plunger discharges liquid. This way can possess a higher proportioning efficiency.

It should be noted that, based on the design concept of the present disclosure, a plurality of plungers and corresponding liquid storage cylinders can be provided according to the type and mixing ratio of the raw materials. It is not limited to the case of the double plunger set forth in the present embodiment.

In the above-mentioned liquid dispensing pump 10, the driving assembly 15 is configured to drive the first plunger 13 and the second plunger 14 to realize linear reciprocating movement, so that the first plunger 13 along with the first liquid storage cylinder 11 and the second plunger 14 along with the second liquid storage cylinder 12 each constitute a pump body that can suck and discharge liquid. During operation, the driving assembly 15 drives the first plunger 13 and the second plunger 14 to operate simultaneously, that is, the first plunger 13 and the second plunger 14 move the same stroke each time. The ratio of the cross-sectional area of the first plunger 13 to the second plunger 14 is set according to a preset mixing ratio. In each cycle of the linear reciprocating movement of the first plunger 13 and the second plunger 14, the first liquid storage cylinder 11 and the second liquid storage cylinder 12 discharge the corresponding raw materials according to the preset mixing ratio. The raw materials flow together and are mixed in the subsequent liquid path to obtain a mixed liquid in the preset mixing ratio, thereby realizing the precise mixing of the different raw materials. Also, this liquid dispensing pump 10 discharges the raw materials in the same ratio each time, so that uniform mixing can be achieved without using a specialized mixer.

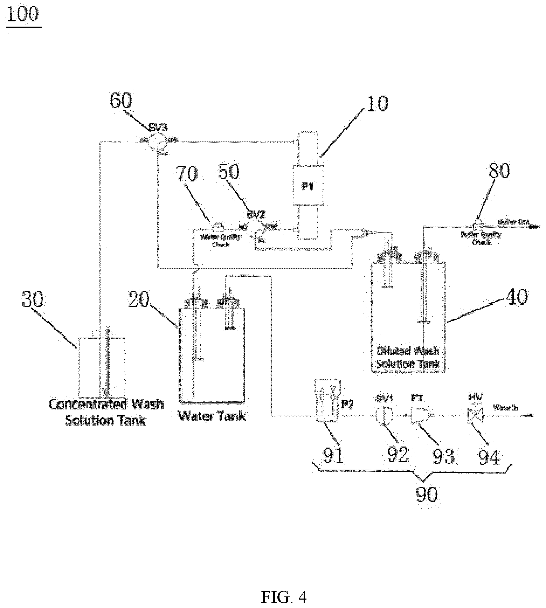

On the basis of FIG. 1 to FIG. 3 and with reference to FIG. 4, a liquid dispensing pump 10 according to an embodiment of the present disclosure is provided.

As shown in FIG. 4, the liquid dispensing device 100 includes the liquid dispensing pump 10 as described above, and further includes a first raw material tank 20, a second raw material tank 30, a mixing tank 40, a first liquid path switcher 50, and a second liquid path switcher 60. The first raw material tank 20 and the second raw material tank 30 are configured to store raw materials, and the mixing tank 40 is configured to store a mixed liquid of different raw materials. The first liquid path switcher 50 is connected among the first raw material tank 20, the liquid dispensing pump 10, and the mixing tank 40. The second liquid path switcher 60 is connected among the second raw material tank 30, the liquid dispensing pump 10, and the mixing tank 40. The first liquid path switcher 50 and the second liquid path switcher 60 are configured to realize the suction and discharge of the corresponding raw materials in cooperation with the suction and discharge operation of the liquid dispensing pump 10.

In the present embodiment, the first liquid path switcher 50 and the second liquid path switcher 60 are solenoid valves. In other embodiments, the first liquid path switcher 50 and the second liquid path switcher 60 are both plunger valves. Under the premise that switching between different liquid paths is enabled, the first liquid path switcher 50 and the second liquid path switcher 60 may also be other types of liquid path switching devices.

In addition, the number of liquid paths of the first liquid path switcher 50 and the second liquid path switcher 60 is adjusted according to the number of raw material tanks and the number of the mixing tanks 40. For example, in the present embodiment, the first liquid path switcher 50 and the second liquid path switcher 60 are both three-way solenoid valves. It can be understood that the first liquid path switcher 50 and the second liquid path switcher 60 may also be formed by a combination of two two-way solenoid valves.

In order to realize an automated liquid dispensing operation, in this embodiment, the first raw material tank 20 is provided with a first liquid level sensor. The second raw material tank 30 is provided with a second liquid level sensor. The mixing tank 40 is provided with a third liquid level sensor. The first liquid level sensor, the second liquid level sensor, and the third liquid level sensor are electrically connected to the driving assembly 15, respectively. The first liquid level sensor is configured to detect whether the liquid level of the first raw material tank 20 reaches a preset material-taking liquid level, and the second liquid level sensor is configured to detect whether the liquid level of the second raw material tank 30 reaches a preset material-taking liquid level. The third liquid level sensor is configured to detect the liquid level height of the existing mixed liquid in the mixing tank 40. According to the first liquid level sensor, the second liquid level sensor, and the third liquid level sensor, trigger signals for controlling the first liquid path switcher 50, the second liquid path switcher 60, and the liquid dispensing pump 10 to operate can be generated, thereby achieving the automated operation of liquid dispensing.

Taking the above-mentioned dilution of the concentrated wash solution as an example, as shown in FIG. 4, the automatic dilution and dispensing will start once the low-liquid level signal of the mixing tank 40 storing the diluted wash solution is detected, under the condition that the pure water in the first raw material tank 20 and the concentrated wash solution in the second raw material tank 30 are sufficient. For a single cycle, the motor 151 drives the first plunger 13 and the second plunger 14 to move downward, respectively sucking the pure water and concentrated solution in one cycle. After the liquid suction is completed, the first liquid path switcher 50 and the second liquid path switcher 60 are turned on, and the liquid path connected to the liquid dispensing pump 10 is switched to the mixing tank 40 storing the diluted wash solution, so that the object connected by the liquid dispensing pump 10 is switched from the first raw material tank 20 and the second raw material tank 30 to the mixing tank 40. The motor 151 then drives the first plunger 13 and the second plunger 14 to move upward, so that the sucked pure water and the concentrated wash solution are discharged to the mixing tank 40. Reciprocating cycles continue until a preset high liquid level is reached in the mixing tank 40, and then the liquid dispensing operation is automatically stopped.

As shown in FIG. 4, in the present embodiment, a first water quality sensor 80 may be provided between the first raw material tank 20 and the first liquid path switcher 50.

Similarly, in the present embodiment, the mixing tank 40 is provided with a drain port, and the drain port is connected to a second water quality sensor.

In addition, the liquid dispensing device 100 can also be provided with a liquid supplement component 90. For example, in the present embodiment, as shown in FIG. 4, a liquid supplement component 90 is provided for the first raw material tank 20. For example, for the dilution of the concentrated wash solution, an automatic supplement of pure water can be set. The liquid supplement component 90 is started once the liquid level detected by the first liquid level sensor is lower than a preset low liquid level. For example, the liquid supplement component 90 includes a liquid pump 91, a control valve 92, a filter 93, and a manual valve 94 connected in sequence. The liquid pump 91 is started to pump pure water into the first raw material tank 20 once the liquid level detected by the first liquid level sensor is lower than the preset low liquid level. The liquid pump 91 is turned off once the liquid level detected by the first liquid level sensor is lower than the preset high liquid level.

In the liquid dispensing device 100 as described above, the first liquid path switcher 50 selectively enables conduction of the liquid path between the first raw material tank 20 and the liquid dispensing pump 10, and the second liquid path switcher 60 selectively enables conduction of the liquid path between the second raw material tank 30 and the liquid dispensing pump 10. The liquid dispensing pump 10 sucks raw materials from the first raw material tank 20 and the second raw material tank 30, respectively. Then, the first liquid path switcher 50 selectively enables conduction of the liquid path between the mixing tank 40 and the liquid dispensing pump 10, and the second liquid path switcher 60 selectively enables conduction of the liquid path between the mixing tank 40 and the liquid dispensing pump 10. The liquid dispensing pump 10 discharges different raw materials into the mixing tank 40 according to a preset mixing ratio. In one suction and discharge cycle of the liquid dispensing pump 10, the liquid dispensing device 100 completes a period of liquid mixing in the mixing ratio that is accurate and uniform.

The above examples only express the preferred embodiments of the present disclosure with the relatively specific and detailed description, but should not be understood as a limitation on the scope of the present disclosure.

## Claims

1. A liquid dispensing device (100) comprising,
a liquid dispensing pump (10) comprising:
a first liquid storage cylinder (11) provided with a first liquid inlet/outlet port (111);
a second liquid storage cylinder (12) provided with a second liquid inlet/outlet port (121);
a first plunger (13) movably connected to the first liquid storage cylinder (11), one end of the first plunger (13) being inserted into an inner cavity of the first liquid storage cylinder (11);
a second plunger (14) movably connected to the second liquid storage cylinder (12), one end of the second plunger (14) being inserted into an inner cavity of the second liquid storage cylinder (12); and
a driving assembly (51) connected to the first plunger (13) and the second plunger (14);
wherein the first plunger (13) has a cross-sectional area larger than that of the second plunger (14); and
wherein the liquid dispensing device (100) further comprises:
a first raw material tank (20);
a second raw material tank (30);
a mixing tank (40);
a first liquid path switcher (50) connected among the first raw material tank (20), the liquid dispensing pump (10), and the mixing tank (40); and
a second liquid path switcher (60) connected among the second raw material tank (30), the liquid dispensing pump (10), and the mixing tank (40);
wherein, when the driving assembly (15) drives the first plunger (13) and the second plunger (14) to move in a first direction, the first liquid path switcher (50) is configured to selectively enable conduction of the liquid path between the first raw material tank (20) and the liquid dispensing pump (10) and the second liquid path switcher (30) is configured to selectively enable conduction of the liquid path between the second raw material tank (30) and the liquid dispensing pump (10), so that the liquid dispensing pump (10) sucks raw materials from the first raw material tank (20) and the second raw material tank (30); and
wherein, when the driving assembly (15) drives the first plunger (13) and the second plunger (14) to move in a second direction opposite to the first direction, the first liquid path switcher (50) is configured to selectively enable conduction of the liquid path between the mixing tank (40) and the liquid dispensing pump (10) and the second liquid path switcher (60) is configured to selectively enable conduction of the liquid path between the mixing tank (40) and the liquid dispensing pump (10), so that the liquid dispensing pump (10) discharges different raw materials into the mixing tank (40).

2. The liquid dispensing device (100) according to claim 1, wherein the first raw material tank is provided with a first liquid level sensor; the second raw material tank (30) is provided with a second liquid level sensor; the mixing tank (40) is provided with a third liquid level sensor; the first liquid level sensor, the second liquid level sensor, and the third liquid level sensor being electrically connected to the driving assembly (15), respectively.

3. The liquid dispensing device (100) according to claim 1, wherein the first liquid path switcher (50) and the second liquid path switcher (60) are solenoid valves or plunger valves.

4. The liquid dispensing device (100) according to claim 1, wherein a first water quality sensor (70) is provided between the first raw material tank (20) and the first liquid path switcher (50).

5. The liquid dispensing device (100) according to claim 1, wherein the mixing tank (40) is provided with a drain port, and the drain port is connected to a second water quality sensor (80).

## Patentansprüche

1. Flüssigkeitsabgabevorrichtung (100) mit:
einer Flüssigkeitsabgabepumpe (10), die aufweist:
einen ersten Flüssigkeitsspeicherzylinder (11), der einen ersten Flüssigkeitseinlass/-auslass (111) aufweist;
einen zweiten Flüssigkeitsspeicherzylinder (12), der einen zweiten Flüssigkeitseinlass/-auslass (121) aufweist;
einen ersten Kolben (13), der beweglich mit dem ersten Flüssigkeitsspeicherzylinder (11) verbunden ist, wobei ein Ende des ersten Kolbens (13) in einen inneren Hohlraum des ersten Flüssigkeitsspeicherzylinders (11) eingesetzt ist;
einen zweiten Kolben (14), der beweglich mit dem zweiten Flüssigkeitsspeicherzylinder (12) verbunden ist, wobei ein Ende des zweiten Kolbens (14) in einen inneren Hohlraum des zweiten Flüssigkeitsspeicherzylinders (12) eingesetzt ist; und
eine Antriebsanordnung (51), die mit dem ersten Kolben (13) und dem zweiten Kolben (14) verbunden ist,
wobei der erste Kolben (13) eine größere Querschnittsfläche hat als der zweite Kolben (14), und
wobei die Flüssigkeitsabgabevorrichtung (100) ferner aufweist:
einen ersten Rohmaterialbehälter (20);
einen zweiten Rohmaterialbehälter (30);
einen Mischbehälter (40);
einen ersten Flüssigkeitswegumschalter (50), der zwischen dem ersten Rohmaterialbehälter (20), der Flüssigkeitsabgabepumpe (10) und dem Mischbehälter (40) verbunden ist; und
einen zweiten Flüssigkeitswegumschalter (60), der zwischen dem zweiten Rohmaterialbehälter (30), der Flüssigkeitsabgabepumpe (10) und dem Mischbehälter (40) verbunden ist,
wobei, wenn die Antriebsanordnung (15) den ersten Kolben (13) und den zweiten Kolben (14) antreibt, so dass sie sich in eine erste Richtung bewegen, der erste Flüssigkeitswegumschalter (50) dafür konfiguriert ist, selektiv eine Durchlässigkeit des Flüssigkeitsweges zwischen dem ersten Rohmaterialbehälter (20) und der Flüssigkeitsabgabepumpe (10) zu ermöglichen, und der zweite Flüssigkeitswegumschalter (30) dafür konfiguriert ist, selektiv eine Durchlässigkeit des Flüssigkeitsweges zwischen dem zweiten Rohmaterialbehälter (30) und der Flüssigkeitsabgabepumpe (10) zu ermöglichen, so dass die Flüssigkeitsabgabepumpe (10) Rohmaterialien aus dem ersten Rohmaterialbehälter (20) und dem zweiten Rohmaterialbehälter (30) ansaugt, und
wobei, wenn die Antriebsanordnung (15) den ersten Kolben (13) und den zweiten Kolben (14) derart antreibt, dass sie sich in eine der ersten Richtung entgegengesetzte zweite Richtung bewegen, der erste Flüssigkeitswegumschalter (50) dafür konfiguriert ist, selektiv die Durchlässigkeit des Flüssigkeitsweges zwischen dem Mischbehälter (40) und der Flüssigkeitsabgabepumpe (10) zu ermöglichen, und der zweite Flüssigkeitswegumschalter (60) dafür konfiguriert ist, selektiv die Durchlässigkeit des Flüssigkeitsweges zwischen dem Mischbehälter (40) und der Flüssigkeitsabgabepumpe (10) zu ermöglichen, so dass die Flüssigkeitsabgabepumpe (10) verschiedene Rohmaterialien in den Mischbehälter (40) abgibt.

2. Flüssigkeitsabgabevorrichtung (100) nach Anspruch 1, wobei der erste Rohmaterialbehälter einen ersten Flüssigkeitspegelsensor aufweist, der zweite Rohmaterialbehälter (30) einen zweiten Flüssigkeitspegelsensor aufweist, der Mischbehälter (40) einen dritten Flüssigkeitspegelsensor aufweist, und der erste Flüssigkeitspegelsensor, der zweite Flüssigkeitspegelsensor und der dritte Flüssigkeitspegelsensor jeweils elektrisch mit der Antriebsanordnung (15) verbunden sind.

3. Flüssigkeitsabgabevorrichtung (100) nach Anspruch 1, wobei der erste Flüssigkeitswegumschalter (50) und der zweite Flüssigkeitswegumschalter (60) Magnetventile oder Kolbenventile sind.

4. Flüssigkeitsabgabevorrichtung (100) nach Anspruch 1, wobei ein erster Wasserqualitätssensor (70) zwischen dem ersten Rohmaterialbehälter (20) und dem ersten Flüssigkeitswegumschalter (50) vorgesehen ist.

5. Flüssigkeitsabgabevorrichtung (100) nach Anspruch 1, wobei der Mischbehälter (40) eine Auslassöffnung aufweist und die Auslassöffnung mit einem zweiten Wasserqualitätssensor (80) verbunden ist.

## Revendications

1. Dispositif de distribution de liquide (100) comprenant,
une pompe de distribution de liquide (10) comprenant :
un premier cylindre de stockage de liquide (11) pourvu d'un premier orifice d'entrée/sortie de liquide (111) ;
un second cylindre de stockage de liquide (12) pourvu d'un second orifice d'entrée/sortie de liquide (121) ;
un premier piston (13) relié de manière mobile au premier cylindre de stockage de liquide (11), une extrémité du premier piston (13) étant insérée dans une cavité interne du premier cylindre de stockage de liquide (11) ;
un second piston (14) relié de manière mobile au second cylindre de stockage de liquide (12), une extrémité du second piston (14) étant insérée dans une cavité interne du second cylindre de stockage de liquide (12) ; et
un ensemble entraînement (51) relié au premier piston (13) et au second piston (14) ;
dans lequel le premier piston (13) a une surface de section transversale supérieure à celle du second piston (14) ; et
dans lequel le dispositif de distribution de liquide (100) comprend en outre :
un premier réservoir de produits bruts (20) ;
un second réservoir de produits bruts (30) ;
un réservoir de mélangeage (40) ;
un premier commutateur de trajet de liquide (50) relié entre le premier réservoir de produits bruts (20), la pompe de distribution de liquide (10) et le réservoir de mélangeage (40) ; et
un second commutateur de trajet de liquide (60) relié entre le second réservoir de produits bruts (30), la pompe de distribution de liquide (10) et le réservoir de mélangeage (40) ;
dans lequel, lorsque l'ensemble entraînement (15) entraîne le premier piston (13) et le second piston (14) à se déplacer dans une première direction, le premier commutateur de trajet de liquide (50) est conçu pour activer sélectivement la conduction du trajet de liquide entre le premier réservoir de produits bruts (20) et la pompe de distribution de liquide (10) et le second commutateur de trajet de liquide (30) est conçu pour activer sélectivement la conduction du trajet de liquide entre le second réservoir de produits bruts (30) et la pompe de distribution de liquide (10), de telle sorte que la pompe de distribution de liquide (10) aspire les produits bruts depuis le premier réservoir de produits bruts (20) et le second réservoir de produits bruts (30) ; et
dans lequel, lorsque l'ensemble entraînement (15) entraîne le premier piston (13) et le second piston (14) à se déplacer dans une seconde direction opposée à la première direction, le premier commutateur de trajet de liquide (50) est conçu pour activer sélectivement la conduction du trajet de liquide entre le réservoir de mélangeage (40) et la pompe de distribution de liquide (10) et le second commutateur de trajet de liquide (60) est conçu pour activer sélectivement la conduction du trajet de liquide entre le réservoir de mélangeage (40) et la pompe de distribution de liquide (10), de telle sorte que la pompe de distribution de liquide (10) décharge différents produits bruts dans le réservoir de mélangeage (40).

2. Dispositif de distribution de liquide (100) selon la revendication 1, dans lequel le premier réservoir de produits bruts est pourvu d'un premier capteur de niveau de liquide ; le second réservoir de produits bruts (30) est pourvu d'un deuxième capteur de niveau de liquide ; le réservoir de mélangeage (40) est pourvu d'un troisième capteur de niveau de liquide ; le premier capteur de niveau de liquide, le deuxième capteur de niveau de liquide et le troisième capteur de niveau de liquide étant respectivement reliés électriquement à l'ensemble entraînement (15).

3. Dispositif de distribution de liquide (100) selon la revendication 1, dans lequel le premier commutateur de trajet de liquide (50) et le second commutateur de trajet de liquide (60) sont des électrovannes ou des vannes à piston.

4. Dispositif de distribution de liquide (100) selon la revendication 1, dans lequel un premier capteur de qualité de l'eau (70) est pourvu entre le premier réservoir de produits bruts (20) et le premier commutateur de trajet de liquide (50).

5. Dispositif de distribution de liquide (100) selon la revendication 1, dans lequel le réservoir de mélangeage (40) est pourvu d'un orifice d'évacuation, et l'orifice d'évacuation est relié à un second capteur de qualité de l'eau (80).
